# EUROPEAN PATENT APPLICATION

(11) **EP 4 807 331 A1**
(43) Date of publication of application: **16.09.2026**
(21) Application number: 25163392.1
(22) Date of filing: 13.03.2025
(51) Int. Cl.: G01J 1/08, G01J 3/28

(54) **METHOD FOR CALIBRATING A DEVICE UNDER TEST, DUT, WITH RESPECT TO LINEARITY, CALIBRATION DEVICE AND OPTICAL PAYLOAD**

(71) Applicant: Airbus Defence and Space GmbH, 82024 Taufkirchen (DE)
(72) Inventor: GONON-MATHIEU, Baptiste, 82024 Taufkirchen (DE); HAIML, Markus, 82024 Taufkirchen (DE)
(74) Representative: Isarpatent

(57) **Abstract**

The present invention provides a method for calibrating a detector device under test, DUT, (2) with respect to linearity, comprising a) irradiating (M1) the DUT (2) with a first optical beam (31) and a second optical beam (41) for a predetermined time period, wherein the first optical beam (31) has a predetermined constant first optical power (32), and wherein the second optical beam (41) is an amplitude modulated optical beam, b) obtaining (M2) a detection signal (21) from the DUT (2), c) repeating (M3) steps a) and b) for a plurality of different predetermined first optical powers (32), d) calculating (M4) a derivative nonlinearity curve of the DUT (2) based on the obtained detection signals of the plurality of first optical powers (32), and e) providing (M5) a calibration curve to transform measured digital values into a linearized scale of optical power on the DUT (2) based on the calculated derivate transfer function (f') of the DUT (2). Further, the present invention provides a corresponding calibration device for calibrating a detector device (2) under test and an optical payload (102) for a satellite or an aircraft.

## Description

### TECHNICAL FIELD OF THE INVENTION

The invention relates to a method for calibrating a device under test, DUT, with respect to linearity as well as calibration device for calibrating a device under test and an optical payload for a satellite or an aircraft, the optical payload comprising the calibration device.

### TECHNICAL BACKGROUND

Linearity calibration of spectrometers, radiometers, Lidar and high-resolution imaging systems is a critical feature for a optical payload business. Linearity calibration is typically performed by measuring the sensor output signal as a function of the incident irradiance. This straightforward approach, however, requires a precise knowledge of the input photon flux, which is in most cases measured by a calibrated reference detector. Measuring the sensor signal output for constant irradiation and variable integration time is another, widely used characterization technique due to its simplicity and robustness, and is typically applied for in-orbit linearity calibration.

However, especially for many (large, mega-pixel) CMOS matrix sensors the transfer function, which describes the conversion of the photon flux to a corresponding signal strength (typically a digital number) is not a single stable linear curve but depends on parameter settings, like frame time, integration time, reset time, etc. In many cases, a calibration table retrieved from variable integration time data cannot be applied to data with variable irradiance (flux) for precision below 1%.

Another approach is a differential linearity measurement. The fundamental or basic concept exists since the invention of lock-in amplifier. Characterizing the non-linearity by differential measurements has been made in the past. For example, Thompson et al. "Beamcon III, a Linearity Measurement Instrument for Optical Detectors" J. Research of the NIST, vol. 99, no. 6, page 751 (Nov-Dec. 1994). Further approaches uses a scheme that is based on large differences of a factor of two in the incident illumination strength. However, detecting small glitches in the linearity behavior remains challenging.

Therefore, the present invention is directed to improving a calibration of an optical detector device.

### SUMMARY OF THE INVENTION

According to the invention, this problem is solved in each case by the subject matters of the independent claims.

According to a first aspect of the invention, a method for calibrating a detector device under test, DUT, with respect to linearity is provided. The method for calibrating a DUT with respect to linearity, comprises a) irradiating the DUT with a first optical beam and a second optical beam for a predetermined time period, wherein the first optical beam has a predetermined constant first optical power, and wherein the second optical beam is an amplitude modulated optical beam, b) obtaining a detection signal from the DUT, c) repeating steps a) and b) for a plurality of different predetermined first optical powers, d) calculating a derivative nonlinearity curve of the DUT based on the obtained detection signals of the plurality of first optical powers, and e) providing a calibration curve to transform measured digital values into a linearized scale of optical power on the DUT based on the calculated derivate transfer function of the DUT.

According to a second aspect of the invention, a calibration device for calibrating a detector device under test, DUT, is provided. The calibration device for calibrating a DUT comprises a first light source configured to generate a first optical beam; a second light source configured to generate a second optical beam, wherein the second optical beam is an amplitude modulated optical beam; an optical setup configured to guide the first optical beam and the second optical beam onto the detector of the DUT, and a controller connected to the first light source, the second light source and the DUT and configured to conduct the inventive method for calibrating a DUT with respect to linearity.

According to a third aspect of the invention, a optical payload for a satellite or an aircraft is provided. The optical payload comprises the inventive calibration device. The calibration device preferably is configured to perform in-orbit calibration of a CMOS detector as the DUT. The CMOS detector is configured as a 1D-line scanner or a 2D-matrix array. The line scanner may be configured as a multiple pixels single line scanner, a multipixels multi line scanner or a time-delay-and-integtration, TDI, line scanner.

A fundamental concept of the present invention is to use a differential sampling for calibrating the DUT. The sampling is performed by illuminating the detector by a constant optical beam providing a background level and at least one amplitude modulated optical beam. The power of the first light source is then varied to cover at least a part of the dynamic range of the DUT. Corresponding data are obtained by respective detection signals from the DUT at these different levels of the first optical power. The modulation amplitude of the modulated second optical beam remains constant. After obtaining differentially measured signals, respective data are integrated to obtain the transfer function, which is used to calibrate the DUT.

For the integration process, a two point numerical correction for gain and offset is performed in a way known in the state of the art and typically applied as a standard method for optical payloads in-orbit calibration. The first light source for the background ramp does not need to be calibrated because its objective is to set the output video level in digital numbers, and not the input flux level in photons. The second light source for the modulation does not need to be calibrated as well. However, it only needs to be sufficient stable in amplitude over the measurement time frame. It is used to correlate a given change of input photons for a measured change of output digital numbers at a certain video level. With the correct integration algorithm, a linearized photon scale for any measured digital number value is obtained.

The invention thus provides a mean of linearity calibration at the defined default parameter set, such as constant frame rate, integration time, gain settings, etc., of a sensor, for instance a CMOS imaging sensor, without the need to calibrate the test bench. The proposed device and method can act as an optical ground support equipment, OGSE, for a satellite. Furthermore, the invention provides a very compact, easy to implement calibration device, if the necessary functionality accoring to the invention is implemented in the controller by design and specification, preferably directly in the detector front-end electronics, FEE. Such a FFE may also be integrated in a board computer of the payload..

Further advantages of the present invention are as follows. A linearity calibration can be performed for variable flux and a constant parameter set. Linearity calibration reaches corrected linearity several orders better than the uncorrected nonlinearity. The test equipment (test bench, OGSE) does not need to be calibrated. The implementation in an optical instrument is easy. It only requires two or three I/O ports on the FEE FPGA, simple RC-filters, simple low-power line drivers and two or three LEDs. Parameter drift of the linearity in orbit due to aging and radiation degradation can be monitored. No moving / turning parts are required for calibration. In preferred embodiments, no beam splitter is required in the optical path.

Therefore, the present invention provides a cost-effective implementation for in-orbit calibration. By the proposed method, calibration can be performed with uncalibrated equipment, which is important for in-orbit operation of a satellite.

The DUT is a detector device, which, in the broadest sense, transforms a photon flux, i.e. electromagnetic waves, into a detection signal, which can be a voltage or, in practice, a digital number of a video signal after analog-to-digital convertion. The DUT can thus be a single or multipixel photodetector in the form of a CMOS or CCD sensor or sensor array. The controller can process the detection signals and perform calculations such as calculating the nonlinearity curve and the following integration to obtain the calibration curve. The controller thus comprises a processor for processing the data and a memory for storing the obtained data. The first and second light sources may be formed by two LEDs, in particular superluminous LEDs. The modulation of the second optical beam can be generated by directly modulating the driving current, or by an external modulator. It is understood that the second optical beam can be generated by only one light source or by more than one light source, as will be explained further below.

Advantageous embodiments and improvements of the present invention are found in the subordinate claims.

According to some aspects according to the invention, the linearized scale is provided by at least one of generating a correction polynomial, a DUT specific analytical formula, and a look-up-table. These are several reliable means for providing a linearized scale for the DUT.

According to some aspects according to the invention, the amplitude modulation is configured as a square wave modulation having an upper state and a lower state, wherein the duty cycle is about 50%. The square wave modulation represents a simple modulation scheme, which provides reliable results. Alternatively, a sinus modulation may be used instead of the square wave modulation scheme, which, however, is more difficult to generate.

According to some aspects according to the invention, the first optical beam is generated by a first light source, and wherein the second optical beam is generated by a second light source, the first light source and the second light source being electrically decoupled from each other. The decoupling ensures that the modulation of the second light beam is generated independently of the first light source, so that potential noise of these light sources is likely to be uncorrelated as well.

According to some aspects according to the invention, the second optical beam is generated by a plurality of light sources, which are independent of and synchronized to each other. Respective modulated beams emitted by each of the plurality of light sources are then optically overlaid or combined by using suitable optical components to form the second optical beam. It is understood that the plurality of light sources generating the second optical beam are also decoupled from the first light source for reducing power correlations. By this embodiment, it is possible to calibrate the DUT with higher accuracy or within faster time in the presence of significant higher order nonlinearities.

According to some aspects according to the invention, a modulation of the amplitude modulated second beam is configured to provide three levels of optical power. Preferably, the three levels of optical power are preferably equally spaced. Furthermore, the three levels of optical power may be provided by configuring the second and third light sources to emit equally square wave modulated beams with a phase shift of 90 deg to each other. This represents one implementation to calibrate the DUT in reasonable time in the presence of significant higher order nonlinearities..

According to some aspects according to the invention, the DUT comprises a plurality of individual sensors, including at least one of linear 1D-detector arrays including time-delay-and-integration, TDI, functionality and matrix 2D-detector arrays. Such a sensor for signal detection can be used in applications on satellite payloads. Such active pixel sensors are also known to be difficult to calibrate due to artefacts in the uncorrected video signal. However, since the present invention is able to calibrate this sensor, it is applicable thus a beneficial candidates as DUT in the context of the invention.

According to some aspects according to the invention, a sampling rate, a frame rate and/or an integration time of the DUT is synchronized to the modulation of the second optical beam. In this way, the data processing of the measured detection signals is much simplified by directly assigning data points to the modulation state without further time slicing. This avoids artifacts in the processed signals and increases the precision of the result.

According to some aspects according to the invention, repeating of steps a) and b) is conducted from a minimum first optical power upwards to a maximum first optical power in a predetermined number of equidistant steps of optical power. In this way, the entire dynamic range or at least a major part of the dynamic range of the DUT can be measured for linearity.

According to some aspects according to the invention, repeating of steps a) and b) is conducted further downwards down to the minimum first optical power in the same predetermined number of equidistant steps of optical power. In this way, there is a significant reduction of 1/f-noise of the test benches and device under test by using a smart modulation scheme. By using lock-in-like techniques for the derivative sampling, the noise bandwidth is strongly reduced. In particular, with the combination of ramping up and down the background level (e.g. by triangle modulation) for significant high number of cycles rejects drifts and instabilities of the differential modulation source. The present embodiment thus provides improved accuracy of the calibration curve.

According to some aspects according to the invention, calculating the derivate transfer function includes processing numerical recorded data of the detection signal to obtain mean signal values for each step of the first optical power, and a modulation amplitude at a modulation frequency of the modulation of the second optical beam, wherein the numerical processing of the mean values, the modulation amplitude, and optionally the amplitudes of the first harmonic frequency, generates an analytical or numerical correction function to transfer recorded digital data of the DUT into a linearized scale of optical power. These steps describe an efficient processing for determining the derivate transfer function to obtain the calibration curve of the DUT by integration.

In preferred embodiments, the modulation amplitude of the modulation frequency at a first harmonic frequency of the modulation frequency at the individual steps of the first optical power is processed for obtaining the derivate transfer function. In these embodiments, the numerical processing of the mean values, the modulation amplitude, and the amplitudes of the first harmonic frequency, generates an analytical or numerical correction function to transfer recorded digital data of the DUT into the linearized scale of optical power. In these embodiments, the first harmonic frequency can be measured by the additional third light source, which is amplitude modulated and phase shifted with respect to the second optical beam. This modulation scheme significantly reduces systematic errors in retrieving the second derivative of the transfer function compared to direct modulating a single light source, especially in the case where the light sources and current drivers may not be calibrated and drifts over time have to be taken into account. This in particular is the case for in-orbit calibration devices. In addition, the described modulation scheme can be implemented simpler and more cost-effectively, as only two digital on/off signals are required and no current level controlled analog signals need to be generated

According to some aspects according to the invention, the controller is configured to synchronize a sampling rate, a frame rate, and/or integration time of the DUT with the modulation of the amplitude modulated second optical beam. As described above, this configuration simplifies data processing and improves the accuracy of the results.

According to some aspects according to the invention, the controller is configured to switch on and off the modulated second light source emitting, at least partly, the second optical beam synchronously with a sub-harmonic frequency of the sampling rate of the DUT by respective I/O pins of an FPGA or microcontroller. The constant first optical power of the first optical beam is set by a pulse-width-modulated, PWM, signal from the respective I/O pin of the FPGA or the microcontroller. The synchronization of the devices as well simplifies the calibration process and delivers more precise results. A FPGA or microcontroller provides a compact device and an efficient processing of the data. In preferred embodiments, the PWM signal is RC-filtered to ensure a rather constant first optical power. It is understood that the I/O pin represents a form of an output port of the controller connected current driver of the light sources illuminating to the DUT. It is further understood that this embodiment can be adapted to further, i.e., a plurality of, modulated light sources. In this case, respective modulated optical beams emitted by the plurality of light sources may be combined to generate the second optical beam. One particular implementation according to an embodiment of the invention is a combination of light sources of different wavelengths to calibrate wavelength dependend nonlinearities of the DUT.

The above embodiments and further developments can be combined with each other as desired, if useful. In particular, all features of the method for calibrating a DUT with respect to linearity are transferable to the calibration device for calibrating a DUT and the optical payload, and vice versa. Further possible embodiments, further developments and implementations of the invention also comprise combinations, not explicitly mentioned, of features of the invention described before or below with respect to the embodiments. In particular, the skilled person will thereby also add individual aspects as improvements or additions to the respective basic form of the present invention.

Advantageous embodiments and further developments emerge from the description with reference to the figures.

### BRIEF SUMMARY OF THE DRAWINGS

The present invention is explained more specifically below on the basis of the exemplary embodiments indicated in the schematic figures, in which:
- Fig. 1: shows a flow chart for a method for calibrating a detector device under test, DUT, with respect to linearity according to an embodiment of the invention;
- Fig. 2: shows a schematic illustration of a calibration device for calibrating a DUT according to an embodiment of the invention;
- Fig. 3: shows a schematic illustration of an illumination scheme for the calibration device for calibrating a DUT according to an embodiment of the invention;
- Fig. 4: shows a schematic illustration of an illumination scheme for the second and third light sources of a calibration device for calibrating a DUT according to an embodiment of the invention;
- Fig. 5: shows a schematic illustration of a satellite comprising a optical payload including a calibration device for calibrating a DUT according to an embodiment of the invention;
- Fig. 6: shows a high-level flow chart for an example method of data processing for obtaining the linear scale of a DUT in a calibration device for the verification of calibrating the DUT according to an embodiment of the invention and comparison to classical calibration methods;
- Fig. 7: shows a result of an example measurement of the nonlinearity of an example DUT before and after correction by a calibrated reference photodiode as a benchmark for the invention;
- Fig. 8: shows results of an example measurement of the nonlinearity of an example DUT before and after correction with different processing methods; and
- Fig. 9: shows an RMS average nonlinearity error of an example DUT before and after correction with the different methods of Fig. 8.

In the figures of the drawing, elements, features and components which are identical, functionally identical and of identical action are denoted in each case by the same reference designations unless stated otherwise.

### DESCRIPTION OF EXEMPLARY EMBODIMENTS

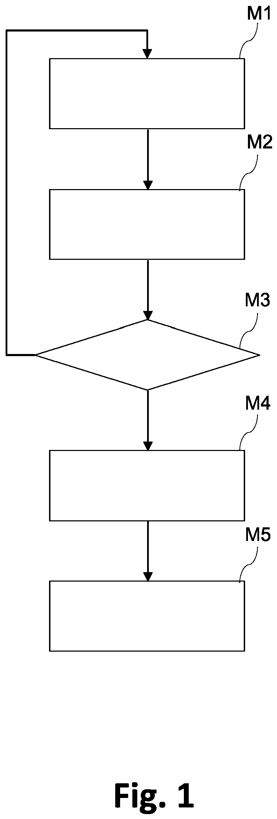

Fig. 1 shows a flow chart for a method for calibrating a detector device under test, DUT 2, with respect to linearity according to an embodiment of the invention.

The DUT 2 is a device having a detector, which is configured to convert a photon flux, e.g. optical radiation, into a corresponding electric signal. The strength of the electric signal should be proportional to the optical power incident on the DUT 2. However, in nonideal detectors, such as photodetectors of any kind, in particular CMOS-sensors, there is a certain amount of nonlinearity in its transfer function f due to the characteristics of the sensor and the electronics used to generate and process the electric signal. In some embodiments, the DUT comprises a plurality of individual sensors, which includes at least one linear 1D-detector array. Preferably, the 1D-detector array includes time-delay-and-integration, TDI, functionality. In further embodiments, the DUT 2 comprises matrix 2D-detector arrays. Other setups for the DUT 2 are also applicable to this invention.

The following method describes a way to calibrate such DUT 2 for linearity with high precision with a number of specific measuring and processing steps. The related calibration device 1, which is used to perform this method, does not need to be calibrated with high accuracy so that maintenance is relatively relaxed. The calibration device 1 is thus suitable for in-orbit operation onboard a satellite, where maintenance is difficult to be performed.

The method comprises a first step a), in which the DUT 2 is irradiated M1 with a first optical beam 31 and a second optical beam 41 for a predetermined time period. The first optical beam 31 has a predetermined constant first optical power 32. The second optical beam 41 is an amplitude modulated optical beam.

In preferred embodiments, the first optical beam 31 is generated by a first light source 3 and the second optical beam 41 is generated by a second light source 4a. In further embodiments, the second optical beam is generated by a plurality of light sources 4a, 4b, which are independent of and synchronized to each other. In these embodiments, the first light source 3 and the second light source 4a, and the plurality of light sources 4a, 4b, are electrically decoupled from each other to provide an optical beam with uncorrelated and clean optical power. The predetermined time period is measured and determined by a clock, which preferably includes a quartz crystal for high-precision time period measurements. The clock thus sends a corresponding electric signal to a controller 6, which controls the first and second light sources 3, 4a, 4b, so that the controller 6 can ensure the emission of the first optical beam 31 over the predetermined period.

In preferred embodiments, the amplitude modulation of the second optical beam 41 is configured as a square wave modulation having an upper state S1 and a lower state S2. A duty cycle is set to be about 50%. Such a square wave based on a on/off scheme is particularly simple to implement in orbit on a satellite payload.

In some embodiments, the second optical beam 41 is generated by a plurality of light sources, which are independent of and synchronized to each other. In some of these embodiments, besides the second light source 4a emitting a first modulated optical beam 41a, a further second modulated optical beam 41b is generated by a further third light source 41b, which is independent of the first light source 3 and the second light source 4a and synchronized to the second light source 4a. In some of these embodiments, the second modulated optical beam 41b is combined, e.g. by overlaying, with the first modulated optical beam 41a to form the amplitude modulated second optical beam 41 irradiating the DUT 2. In preferred embodiments, a modulation 43 of the second beam 41 is configured to provide three, preferably equally spaced, levels of optical power, in particular by configuring the second light source 4a and the third source 4b to emit equally square wave modulated optical beams 41a, 41b with a phase shift of 90 deg to each other. In further embodiments, more than two modulated light sources 4a, 4b are provided to provide further levels of optical power and/or different wavelengths.

In a second step b) of the method, a detection signal 21 is obtained M2 from the DUT 2. The detection signal 21 is an electrical signal, which corresponds to the optical power of the irradiated first and second optical beams 31, 41 but includes nonlinearities. The detection signal 21 is typically provided by a digital number, but may also be provided by voltages and the like. The detection signal 21 may also contain data of more than one pixel of the DUT 2 in case of multi-pixelated sensors of the DUT 2.

In preferred embodiments, a sampling rate, a frame rate and/or an integration time of the DUT 2 is synchronized to the modulation of the second optical beam 41. As the modulation of the light sources 3, 4a, 4b is synchronized and phase-locked with the detector frame rate of the DUT 2, it is possible to measure e.g. 5 frames off and 5 frames on. In practice, the first on/off frame is typically dropped, and only 4 frames are used for evaluation. rejecting image lag and LED switch-on settling of the first frame after transition. This scheme simplifies processing and reduces artifacts in the detection signal 21.

The steps a) and b) are repeated M3 for a plurality of different predetermined first optical powers 32 of the first light source 3. In preferred embodiments, steps a) and b) corresponding the method steps M1 and M2 are repeated from a minimum first optical power 32 upwards to a maximum first optical power 32 in a predetermined number of equidistant steps of optical power. In some of these embodiments, these steps a) and b) are repeated further downwards down to the minimum first optical power 32 in the same predetermined number of equidistant steps of optical power.

In a further step d), a derivative nonlinearity curve of the DUT 2 is calculated M4 based on the obtained detection signals 21 of the plurality of first optical powers 32. The previously obtained detection signals 21 for each of the first optical power 32 are used to calculate the derivate of the transfer function f, which converts the photon flux into a corresponding signal typically expressed as a digital number, at a different point. The derivate transfer function f is then represented by each of these points and/or an interpolation of these.

In preferred embodiments, the calculation of the derivate transfer function f' includes processing numerical recorded data of the detection signal 21 to obtain mean signal values S0 for each step of the first optical power 32, and a modulation amplitude 42 at a modulation frequency of the modulation 43 of the second optical beam 41, and preferably a modulation amplitude 42 of the modulation frequency at a first harmonic frequency of the modulation frequency at the individual steps of the first optical power. The mean signal values S0 is the mean of the modulation amplitude 42, which, in some embodiments, is exactly ½ of the modulation amplitude. The numerical processing of the mean values, the modulation amplitude 42, and optionally the amplitudes of the first harmonic frequency, generates an analytical or numerical correction function to transfer recorded digital data of the DUT 2 into a linearized scale of optical power. In some embodiments, the nonlinearity of the DUT 2 is calibrated up to a selected, arbitrary order of nonlinearity, in which decreased sampling spacing of the first optical power 32 and decreased modulation amplitude 42 may be applied. In further embodiments, a three level modulation 43 is selected generated as combination of two modulations 42a and 42b and obtaining modulation signals at the the first harmonic frequency by the controller 6. In such embodiments, the amount of measurement time can be significantly reduced and/or the final accuracy of linearity calibration be improved in the presence of significant higher order noninearities of the DUT 2.

In an additional step e), a calibration curve is provided M5 based on the calculated derivate transfer function f' of the DUT 2. The calibration curve is suitable to transform measured digital values into a linearized scale of optical power on the DUT 2. In preferred embodiments, the linearized scale is provided by at least one of generating a correction polynomial, a DUT specific analytical formula, and a look-up-table. For obtaining the calibration curve, at least an integration is required for calculating a numerical transfer function from the previously obtained derivate transfer function f'. From this integrated curve, the calibration curve can be determined in a straightforward manner.

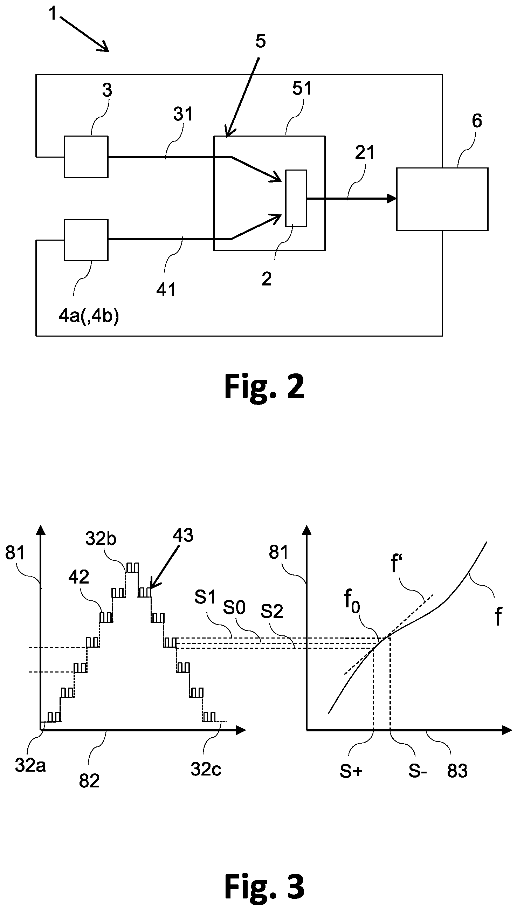

Fig. 2 shows a schematic illustration of a calibration device 1 for calibrating a DUT 2 according to an embodiment of the invention.

The calibration device 1 for calibrating a detector device under test, DUT 2, comprises a first light source 3 configured to generate a first optical beam 31. The calibration device 1 further comprises at least a second light source 4a, which is configured to generate, at least partly, a second optical beam 41. The second optical beam 41 is an amplitude modulated optical beam. As described above, the modulation of the second optical beam 41 can be performed by direct modulation, e.g. of a driving current of a SLED as second light source 4a, or e.g. by an external modulator.

The calibration device 1 also comprises an optical setup 5, which is configured to guide the first optical beam 31 and the second optical beam 41 onto the DUT 2. This can be performed by any known optical elements based on free-space or fiber optics. In the embodiment shown in Fig. 2, an enclosure 51 is arranged around the DUT 2 to prevent stray light and other environmental influences from affecting the measurement. The calibration device 1 further comprises a controller 6 connected to the first light source 3, the second light source 4a and the DUT 2 and configured to conduct the above-mentioned method for calibrating the DUT 2 for linearity.

The controller 6 is thus configured a) to irradiate the DUT 2 with a first optical beam 31 and a second optical beam 41 for a predetermined time period. The first optical beam 31 has a predetermined constant first optical power 32. The controller 6 is further configured to b) obtain a detection signal 21 from the DUT 2. The controller 6 is configured to repeat the previous two steps a) and b) for a plurality of different predetermined first optical powers 32. The controller 6 is further configured to calculate a derivative nonlinearity curve of the DUT 2 based on the obtained detection signals of the plurality of first optical powers 32, and e) provide a calibration curve to transform measured digital values into a linearized scale of optical power on the DUT 2 based on the calculated derivate transfer function f' of the DUT 2.

The controller 6 thus is configured to process the detection signals and perform calculations such as calculating the nonlinearity curve and the following integration to obtain the calibration curve. The controller 6 thus comprises a processor for processing the data and a memory for storing the obtained data. The controller 6 may be integrated into a PC, or may be formed by an FPGA or an application specific integrated circuit, ASIC, or may be provided in any other suitable form.

In a preferred embodiment, the controller 6 is configured to synchronize a sampling rate, a frame rate, and/or integration time of the DUT 2 with the modulation of the amplitude modulated second optical beam 41.

Fig. 3 shows a schematic illustration of an illumination scheme for the calibration device 1 for calibrating a DUT 2 according to an embodiment of the invention.

Fig. 3 shows a diagram on the left-hand side with a horizontal time axis 82 and a vertical axis 81 indicating the photon flux, i.e. the optical power. A second diagram on the righthand side shows the same vertical axis 81 versus the video signal strength on the horizontal axis 83. The video signal strength S is delivered in digital numbers. The video signal corresponds to the detection signal 21 sent from the DUT 2 to the controller 6 for further processing.

In the scheme shown in Fig. 3, steps a) and b), i.e. method steps M1 and M2, are repeated from a minimum first optical power 32a upwards to a maximum first optical power 32b in a predetermined number of equidistant steps of optical power. The of steps a) and b) are conducted then further downwards, down back to the minimum first optical power 32a in the same predetermined number of equidistant steps of optical power. There are six equidistant steps shown in Fig. 3, which results in seven different levels of first optical power 32. It is understood that the number of equidistant steps may be changed by any suitable number for the measurements. Furthermore, it is not necessary to calibrate the power levels, i.e. the equidistant step in optical power, very precisely since the following processing can deal with a certain degree of imprecision, e.g. 10%, and can still provide precise results.

As shown in Fig. 3, the amplitude modulation is configured as a square wave modulation having an upper state S1 and a lower state S2. The duty cycle is about 50%. The average of the upper state S1 and lower state S2 is indicated by the average state S0. The scheme shown in the left diagram is then applied to certain points of the transfer function f, which describes the conversion of optical power into an electric signal strength of the detection signal 21. In Fig. 3, the fourth first power level corresponds to the point f₀. By the modulated signal formed by the first and second signal beams 31, 41, the derivate function f' in point f₀ of the transfer function f is measured. By applying these to multiple points, a derivate transfer function f' can be obtained first. By integrating the inverse derivate function (f')⁻¹ and applying known methods to obtain the integration constants, as mentioned before, a calibration curve is obtained that is to be used when measuring optical signals with the DUT 2 to arrive corresponding proportional signal strengths, from which the optical power can be derived directly.

In preferred embodiments, calculating the derivate transfer function f' includes processing numerical recorded data of the detection signal 21 to obtain the mean signal values S0 for each step of the first optical power 32, and the modulation amplitude 42 at a modulation frequency of the modulation 43 of the second optical beam 41. In further preferred embodiments, a modulation amplitude 42 of the modulation frequency at a first harmonic frequency of the modulation frequency at the individual steps of the first optical power 32 is obtained in this way. The numerical processing of the mean values S0, the modulation amplitude 42, and preferably the amplitudes of the first harmonic frequency, generates an analytical or numerical correction function to transfer recorded digital data of the DUT 2 into a linearized scale of optical power, e.g. in the form of a correction polynomial, a DUT specific analytical formula, and a look-up-table.

In some embodiments, data processing is performed in the following way in order to arrive at the linear scale.

The sensor, i.e. DUT 2, is exposed to the square-modulated illumination of first optical power 32 and amplitude 42. Since the light sources 3, 4a, 4b are not calibrated, their amplitude are not known in a first instance. A Taylor expansion of the transfer function f around a given point f₀ then yields respectively the measured high state and low-state signals S+, S- of the modulation 43 as: ${S}_{i}^{+} = f \left({Φ}_{i}\right) + Γ ⋅ f ′ \left({Φ}_{i}\right) + O \left({Γ}^{2}\right)$ ${S}_{i}^{-} = f \left({Φ}_{i}\right) - Γ ⋅ f ′ \left({Φ}_{i}\right) + O \left({Γ}^{2}\right)$ , wherein Γ is the amplitude 42 of the modulation of the second optical beam 41, i the i-th point in the transfer function f, in the example of Fig. 3 the fourth, Φᵢ the mean incident optical power, respectively the mean incident photon flux at the i-th point in the transfer function f, and O(Γ²) are terms of second and higher order. Provided that the amplitude Γ is small enough, it is possible to approximate the value of the transfer function f and its derivative f' from the output signal: $\begin{matrix}f \left({Φ}_{i}\right) \approx \frac{1}{2} \left({S}_{i}^{-}+{S}_{i}^{+}\right) = {\hat{S}}_{i} \\ f ′ \left({Φ}_{i}\right) \approx \frac{1}{2 Γ} \left({S}_{i}^{+}-{S}_{i}^{-}\right) = \frac{1}{2 Γ} ⋅ {Δ}_{i}\end{matrix}$

Furthermore, the photon flux Φ can be expressed as: $Φ \left(S\right) = \int \left({f}^{- 1}\right) ′ \left(s\right) ds = \int \frac{1}{f ′ \left({f}^{- 1}\left(s\right)\right)} \left(s\right) ds$ with $f \left({f}^{- 1}\left(s\right)\right) ′ = f ′ \left({Φ}_{i}\right) \approx \frac{1}{2 Γ} ⋅ {Δ}_{i}$

The integral can be computed by a trapezoidal scheme as follows: $\left.\begin{matrix}{{Φ}^{˜}}_{0} = 0 \\ {{Φ}^{˜}}_{i + 1} = {{Φ}^{˜}}_{i} + \frac{1}{2} \left(\frac{1}{{Δ}_{i}}+\frac{1}{{Δ}_{i + 1}}\right) ⋅ \left({\hat{S}}_{i + 1}-{\hat{S}}_{i}\right) \\ {Φ}_{i} \approx 2 Γ ⋅ {{Φ}^{˜}}_{i} + {Φ}_{0} with Γ and {Φ}_{0} unnknown\end{matrix}\right\}$

As mentioned above, this processing yields two unknown constants: the modulation amplitude Γ or 42 , and an offset Φ₀ because of the integration. In the characterization of CMOS sensors as the DUT 2, the pixel individual offset Φ₀ consists for instance of the sum of the electrical video offset level, the dark current signal and unintentional residual background signal. The two coefficients can be chosen in order to express a new corrected digital scale. For instance, a quantity L can be constructed as a linear transformation, which is equal to S at two arbitrary values. Such a scale can be expressed in terms of linearized digital numbers, linDN with the convenience of having 1 linDN ≈ 1 DN, i.e. digital number, DN. However, one linDN strictly matches a fixed number of detected photons over the whole dynamic range. Thereafter, data from a photon transfer function f based on linearized linDN data could be used to determine the absolute value of Γ to transform linDN into collected photo-electrons. Any other commonly in-orbit implemented 2-point gain-offset calibration, including deep-space view, diffused sun view, or in the case of thermal infrared detectors, one or two blackbody reference measurements, can be used to determine the absolute values of Γ and Φ₀ to transfer linDN in absolute incident optical power, respectively photon flux, over the entire signal dnamic range from 32a to 32b.

A corrective look-up table S->L may then be built through the linear interpolation of Lᵢ values to be able to correct any image. The whole process is done pixel-wise. As mentioned before, besides the look-up table, the linear scale can also be provided as a correction polynomial or a DUT specific analytical formula.

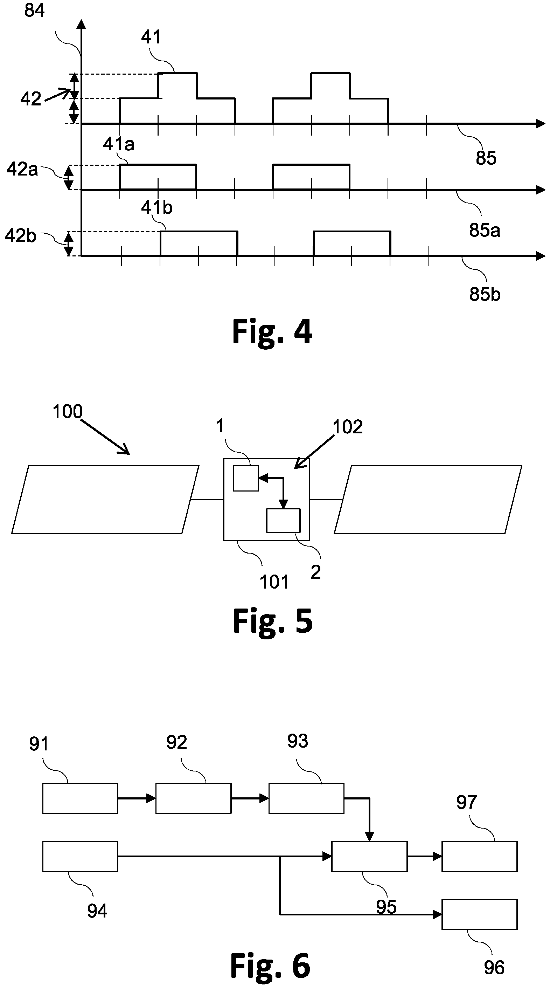

Fig. 4 shows a schematic illustration of an illumination scheme for the second and third light source 4a, 4b of a calibration device 1 for calibrating a DUT 2 according to an embodiment of the invention.

In this embodiment, the amplitude modulated optical beam is generated by two or more independent, synchronized light sources 4. Fig. 4 thus shows a diagram, in which the vertical axis 84 indicates the modulated optical power. A horizontal axis 85 provides the time scale. This horizontal axis is multiplied to show the same time axis for the second light source 4a in axis 85a and a third light source 4b in axis 85b, which together generate the amplitude modulated second optical beam 41.

By the following scheme, a further improvement in quality and precision, or reduction of measurement time can be implemented. By using two light sources, e.g. LEDs, for the differential modulation as shown in the Fig. 4, not only the slope, but also the curvature of the DUT's characteristic derivative nonlinearity curve or transfer function f at the i-th point in the transfer function f can be measured. This makes the integration and e.g. a look-up-table, LUT, generation algorithm more complex, but the result more robust.

The idea of the first-and-second-order derivative sampling described in this embodiment can be understood by the scheme shown in Fig. 4. The implementation of first and second order derivatives into the LUT generating algorithms helps to improve the calibration accuracy versus first order derivative sampling. In particular, the equations (1)-(5) above are to be amended by second order terms as the skilled person is able to perform.

A modulation 43 of the amplitude modulated second beam 41 is configured to provide three, preferably equally spaced, levels of optical power. This is shown in Fig. 4, where the second light source 4a emits a first modulated optical beam 41a having a second optical power 42a, and the third light source 4b is emitting a second modulated optical beam 41b having a third optical power 42b. The second and third optical power 42a, 42b are of about equal, however, phase shifted by 90 degrees, as can be seen in Fig. 4. This creates a repeating 0-1-2-1 level modulated scheme with an amplitude 42. Thus, the controller 6 is configured to control the second light source 4a and third sources 4b to emit respective equally square wave modulated optical beams 41a, 41b with a phase shift of 90 deg to each other. The two modulated optical beams 41a, 41b may then be combined to form the second optical beam 41 having an amplitude 42, which is similar to the sum of the optical power 42a, 42b of each of the modulated light sources 4a, 4b.

In this case as well, the second and third light sources 4a, 4b are implemented independently of each other to omit monitoring and calibration of the emitted light of an otherwise possible single "0-1-2-1" nonlinear modulation light source, as it is shown in the first plot in Fig. 4, i.e. by axes 84 and 85. The modulation scheme according to an embodiment of the invention with two independent second and third light sources 4a,4b is rather insensitive to the optical powers 42a, 42b being exactly identical. In comparision to a single 0-1-2-1 modulated light source the extraction of the curvature f", which is the second derivate of the transfer function f, at f₀ could be several orders of magnitude improved. For a typical example, a DUT 2 with moderate nonlinear terms up to forth order, a modulation amplitude Γ of 2% of the signal dynamics, and a deviation of the middle level "1" by 0.01% of Γ from the ideal center level generates a systematic error of 1% in the f" retrieval by direct modulation. For a modulation scheme according Fig. 4 with the same parameters, the two optical power levels 42a, 42b need to be only equal within 10% to retrieve f" with 1% accuracy, which is 1000 times less stringent compared to the direct 0-1-2-1 modulation. This is especially an advantage for embodiments with non-calibrated light sources, in particular for in-orbit calibration of a satellite optical payload.

In preferred embodiments, the controller 6 is configured to switch on and off the modulated second light source 4a emitting the second optical beam 41 synchronously with a sub-harmonic frequency of the sampling rate of the DUT 2 by respective I/O pins of an FPGA or microcontroller, and wherein the constant first optical power of the first optical beam 31 is set by a pulse-width-modulated, PWM, signal from the respective I/O pin of the FPGA or the microcontroller, wherein the PWM signal preferably is RC-filtered.

Fig. 5 shows a schematic illustration of a satellite 100 comprising a optical payload 102 including a calibration device 1 for calibrating a DUT according to an embodiment of the invention.

The optical payload 102 for a satellite or an aircraft, the optical payload 102 comprising a calibration device 1 as described above. The calibration device 1 and the DUT 2 are arranged in a satellite platform 101 of a satellite 100. In preferred embodiments, the calibration device 1 is configured to perform in-orbit calibration of a CMOS detector as the DUT 2. The CMOS detector is configured as a 1D-line scanner or a 2D-matrix array. In some embodiments, the line scanner is configured as a multiple pixels single line scanner. In further embodiments, the line scanner is configured a multipixels multi line scanner. In further embodiments, the line scanner is configured a time-delay-and-integtration, TDI, line scanner.

### Example Calibration, Verification and Comparison

Fig. 6 shows a high-level flow chart for data processing for obtaining the linear scale of a DUT 2 in a calibration device 1 for the verification of calibrating the DUT 2 according to an embodiment of the invention and comparison to classical calibration methods.

In a first step, a derivate sampling 91 is performed, which delivers the detection signals 21 with signal strength S=f(Φ) using amplitude modulation amplitude Γ so that the nonlinear derivate curve can be obtained. This corresponds to the first four steps a) to d) or M1 to M4 of the above-mentioned method. Then, the integration is performed 92 with a further normalization step 93, which are both integrated in step e) or M5. In this embodiment, a reference measurement without amplitude modulation is performed 94 using an InGaAs photodiode as a calibrated reference DUT, to obtain reference data for calibrating a scale of power or photon flux. This classical method is known as direct sampling. In a further step 96 a "best case" calibrated linearity curve is provided for reference and benchmark of the invention. The linearity of the calibrated reference DUT is at least one order of magnitude better than the DUT 2. However, such reference DUT is not possible to apply in an optica payload e.g. onboard a satellite. In a further step 95, the dataset of step 94 is corrected by the data, e.g. in the form of a LUT, obtained in step 93. The residual nonlinearity of the corrected dataset is calculated in step 97. A comparision of the results of step 96 and 97 provides a benchmark of the invention and proves the efficiency of linearity calibration by derivative sampling in accordance with the invention.

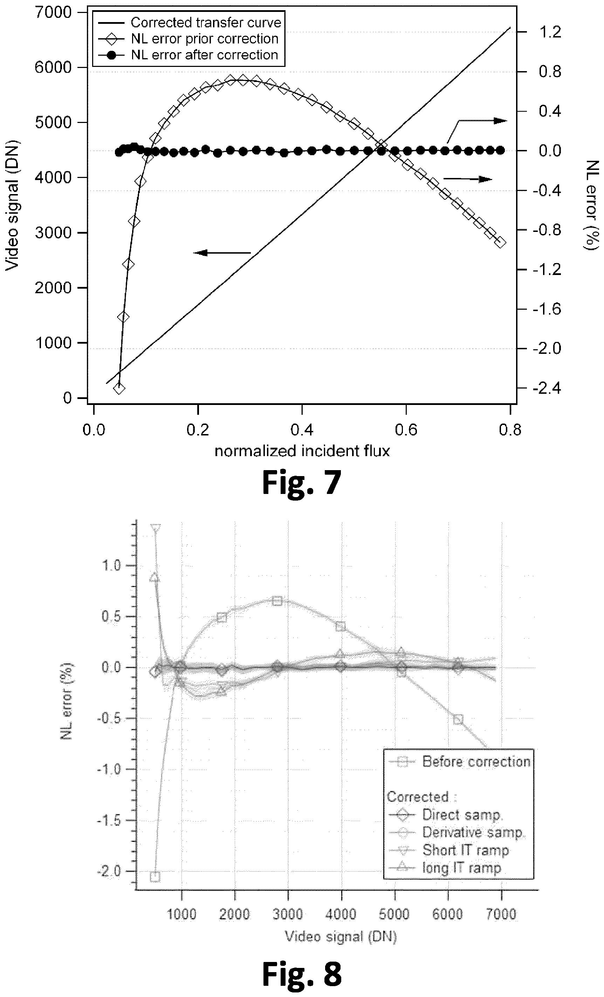

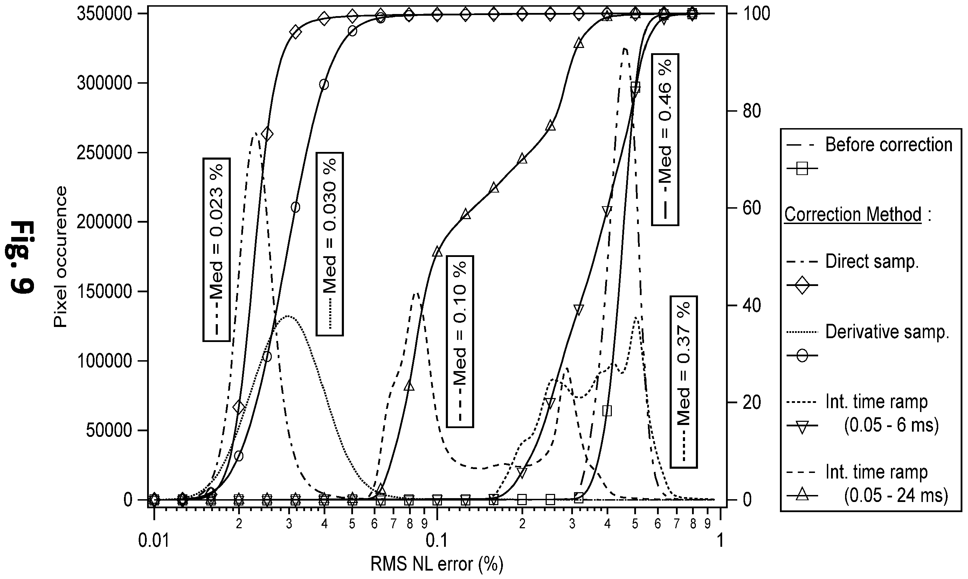

Fig. 7 shows a result of an example measurement of the nonlinearity of an example DUT 2 before and after correction by a calibrated reference photodiode as a benchmark for the invention. Fig. 7 thus shows the results as calibrated by direct sampling. Fig. 8 shows results of an example measurement of the nonlinearity of an example DUT 2 before and after correction with several methods. Fig. 9 shows an RMS average nonlinearity error of an example DUT 2 before and after correction with several methods.

Fig. 7 shows the uncorrected nonlinearity ("NL error prior correction") of the DUT 2 and the residual nonlinearity after direct sampling calibration ("NL error after correction") of DUT 2 by a reference photodiode (Hamamatsu Photonics, G12183-220K). The resulting corrected transfer curve is shown as well in Fig. 7.

In the following, four different methods to provide linearity calibration are compared. The first method is a direct measurement, which requires a calibrated light source so that the photon flux is known and the detection signal 21 of the DUT 2 can be directly converted into a linear scale.

The second method is the derivative sampling as it was described above with reference to Fig. 1 to 5.

The third and fourth calibration methods relate the aforementioned method using constant irradiation and variable integration time. This method is referred here as a integration time (IT) ramp measurement. It is performed in a similar way as the reference measurement, but without attenuator. Instead, the integration time is ramped up and down instead. The first light source 3, here a background SLED, outputs a constant power, set in order to slightly saturates the sensor at the maximum IT of the ramp. With this method, the integrated flux is considered proportional with the IT, which is precisely known as it has an accuracy of one better than clock cycle (25 ns). In order to keep a stable power dissipation, a frame rate is kept the same during the whole measurement. Two runs of the measurement have been achieved, with respectively: 0.05-6 ms and 0.05-24 ms IT range, and 136 Hz (nominal) and 40 Hz frame-rate, respectively, i.e. short IT ramp and long IT ramp. For application in orbit, rather longer IT are usually required as the on-board calibration light sources are not able to cover the full-dynamic range of the detector at nominal frame times. Two correction look-up tables have been computed from the data and applied to the reference measurement.

The plot of Fig. 8 provides an overview of the relative efficiency of these techniques. A curve showing the nonlinearity before correction ("Before correction") is shown as well. As expected, the correction provided by the reference measurement (direct sampling) is close to perfect, with variation within the noise level. Similar applies to the derivative sampling method, with a bit more noise contribution at low values. On the other hand, the correction by the integration time ("short IT ramp", "long IT ramp") ramp exhibit clear limitations. This is particularly true for small signal values.

A further look provides the histograms Fig. 9. For each pixel of the sensor or DUT 2, the RMS values of the NL error curves have been computed to give a map, from which the histograms are derived (log scale on the horizontal axis). It is then clear that IT ramp provides a far from ideal correction in this case, with median correction factors of 1.2 and 4.6, or 0.10% ("Int. time ramp (0.05-24ms)") and 0.37% (Int. time ramp (0.05-6ms)"), respectively. The derivative sampling method performs a sufficient correction, as the median RMS nonlinearity error is reduced by a factor 16. Compared to the reference direct sampling correction, which provides a median correction of 0.023% ("Direct samp."), the remaining RMS nonlinearity error of the derivate sampling is only about 20% greater, i.e. 0.030%. The uncalibrated DUT 2 provides a mean error of 0.46% ("Before correction").

In the detailed description above, various features have been combined in one or more examples in order to improve the rigorousness of the illustration. However, it should be clear in this case that the above description is of merely illustrative but in no way restrictive nature. It serves to cover all alternatives, modifications, and equivalents of the various features and exemplary embodiments. Many other examples will be immediately and directly clear to a person skilled in the art based on his knowledge in the art in consideration of the above description.

The exemplary embodiments have been chosen and described in order to be able to present the principles underlying the invention and their application possibilities in practice in the best possible way. As a result, those skilled in the art can optimally modify and utilize the invention and its various exemplary embodiments with regard to the intended purpose of use. In the claims and the description, the terms "including" and "having" are used as neutral linguistic concepts for the corresponding terms "comprising". Furthermore, use of the terms "a", "an" and "one" shall not in principle exclude the plurality of features and components described in this way.

While at least one exemplary embodiment of the present inventions is disclosed herein, it should be understood that modifications, substitutions and alternatives may be apparent to one of ordinary skill in the art and can be made without departing from the scope of this disclosure. This disclosure is intended to cover any adaptations or variations of the exemplary embodiments. In addition, in this disclosure, the terms "comprise" or "comprising" do not exclude other elements or steps, the terms "a" or "one" do not exclude a plural number, and the term "or" means either or both. Furthermore, characteristics or steps, which have been described, may also be used in combination with other characteristics or steps and in any order unless the disclosure or context suggests otherwise. This disclosure hereby incorporates by reference the complete disclosure of any patent or application from which it claims benefit or priority.

### LIST OF REFERENCE SIGNS

- 1: calibration device
- 2: detector device under test, DUT
- 3: first light source
- 4a: second light source
- 4b: third light source
- 5: optical setup
- 6: controller
- 21: detection signal
- 31: first optical beam
- 32: first optical power
- 32a, 32c: minimum optical power
- 32b: maximum optical power
- 41: second optical beam
- 41a: first modulated beam
- 41b: second modulated beam
- 42: amplitude of the second optical beam
- 42a: (second) optical power of the first modulated beam
- 42b: (third) optical power of the second modulated beam
- 43: modulation
- 51: enclosure
- 81-86: diagram axes
- 91-96: Measurement steps
- 100: satellite
- 101: satellite platform
- 102: optical payload

- M1-M5: Method steps
- S0: Mean optical power
- S1: Upper state
- S2: lower state
- S+: upper state signal
- S-: lower state signal

## Claims

1. Method for calibrating a detector device under test, DUT, (2) with respect to linearity, comprising
a) irradiating (M1) the DUT (2) with a first optical beam (31) and a second optical beam (41) for a predetermined time period, wherein the first optical beam (31) has a predetermined constant first optical power (32), and wherein the second optical beam (41) is an amplitude modulated optical beam,
b) obtaining (M2) a detection signal (21) from the DUT (2),
c) repeating (M3) steps a) and b) for a plurality of different predetermined first optical powers (32),
d) calculating (M4) a derivative nonlinearity curve of the DUT (2) based on the obtained detection signals (21) of the plurality of first optical powers (32), and
e) providing (M5) a calibration curve to transform measured digital values into a linearized scale of optical power on the DUT (2) based on the calculated derivate transfer function (f') of the DUT (2).

2. Method according to claim 1, wherein the linearized scale is provided by at least one of generating a correction polynomial, a DUT specific analytical formula, and a look-up-table.

3. Method according to claims 1 or 2, wherein the amplitude modulation is configured as a square wave modulation having an upper state (S1) and a lower state (S2), wherein the duty cycle is about 50%.

4. Method according to any of claims 1 to 3, wherein the first optical beam (31) is generated by a first light source (3), and wherein the second optical beam (41) is generated by a second light source (4a), the first light source (3) and the second light source (4a) being electrically decoupled from each other.

5. Method according to any of claims 1 to 4, wherein the second optical beam (41) is generated by a plurality of light sources, which are independent of and synchronized to each other.

6. Method according to claim 5, wherein a modulation (43) of the second optical beam (41) is configured to provide three, preferably equally spaced, levels of optical power, in particular by configuring a second light source (4a) and a third source (4b) to emit respective equally square wave modulated optical beams (41a, 41b) with a phase shift of 90 deg to each other.

7. Method according to any of the previous claims, wherein the DUT comprises a plurality of individual sensors, which includes at least one of linear 1D-detector arrays, preferably including time-delay-and-integration, TDI, functionality and matrix 2D-detector arrays.

8. Method according to any of the previous claims, wherein a sampling rate, a frame rate and/or an integration time of the DUT (2) is synchronized to the modulation of the second optical beam (41).

9. Method according to any of the previous claims, wherein repeating of steps a) and b) is conducted from a minimum first optical power (32a) upwards to a maximum first optical power (32b) in a predetermined number of equidistant steps of optical power.

10. Method according to claim 9, wherein repeating of steps a) and b) is conducted further downwards down to the minimum first optical power (32a) in the same predetermined number of equidistant steps of optical power.

11. Method according to any of the previous claims, wherein calculating the derivate transfer function (f') includes processing numerical recorded data of the detection signal (21) to obtain mean signal values (S0) for each step of the first optical power (32), and a modulation amplitude (42) at a modulation frequency of the modulation (43) of the second optical beam (41), and preferably a modulation amplitude (42) of the modulation frequency at a first harmonic frequency of the modulation frequency at the individual steps of the first optical power, wherein the numerical processing of the mean values, the modulation amplitude (42), and optionally the amplitudes of the first harmonic frequency, generates an analytical or numerical correction function to transfer recorded digital data of the DUT (2) into a linearized scale of optical power.

12. Calibration device (1) for calibrating a detector device under test, DUT (2), comprising
a first light source (3) configured to generate a first optical beam (31);
a second light source (4a) configured to generate a second optical beam (41), wherein the second optical beam (41) is an amplitude modulated optical beam;
an optical setup (5) configured to guide the first optical beam (31) and the second optical beam (41) onto the DUT (2), and
a controller (6) connected to the first light source (3), the second light source (4a) and the DUT (2) and configured to conduct the method of any of claims 1 to 11.

13. Calibration device comprising the calibration device according to claim 12, wherein the controller (6) is configured to synchronize a sampling rate, a frame rate, and/or integration time of the DUT (2) with the modulation of the amplitude modulated second optical beam (41).

14. Calibration device according to claim 13, wherein the controller (6) is configured to switch on and off the modulated second light source (4a) emitting the second optical beam (41) synchronously with a sub-harmonic frequency of the sampling rate of the DUT (2) by respective I/O pins of an FPGA or microcontroller, and wherein the constant first optical power (32) of the first optical beam (31) is set by a pulse-width-modulated, PWM, signal from the respective I/O pin of the FPGA or the microcontroller, wherein the PWM signal preferably is RC-filtered.

15. Optical payload (102) for a satellite or an aircraft, the optical payload (102) comprising a calibration device (1) according to any of claims 12 to 14, wherein the calibration device (1) preferably is configured to perform in-orbit calibration of a CMOS detector as the DUT (2), wherein the CMOS detector is configured as a 1D-line scanner or a 2D-matrix array, wherein the line scanner in particular is configured as a multiple pixels single line scanner, a multipixels multi line scanner or a time-delay-and-integtration, TDI, line scanner.
